# EUROPEAN PATENT APPLICATION

(11) **EP 2 955 431 A1**
(43) Date of publication of application: **16.12.2015**
(21) Application number: 14172069.8
(22) Date of filing: 12.06.2014
(51) Int. Cl.: F21V 7/00, F21V 7/08, G02B 19/00

(54) **Optical arrangement, lighting device and luminaire**

(71) Applicant: Koninklijke Philips N.V., 5656 AE Eindhoven (NL)
(72) Inventor: The designation of the inventor has not yet been filed
(74) Representative: Stil, Lambert Johannes

(57) **Abstract**

Disclosed is an optical arrangement (10) comprising a reflector (20) having a reflective elliptical surface (22) delimiting a central aperture (23), said reflective elliptical surface having a first focal point (24) and a second focal point (26) on an optical axis (12) extending through said central aperture; and a mirror (30) on said optical axis for redirecting light generated in said first focal point and reflected by said elliptical reflector towards said mirror through said central aperture. A lighting device (100) including such an optical arrangement and a luminaire including such a lighting device are also disclosed.

## Description

### FIELD OF THE INVENTION

The present invention relates to an optical arrangement including a reflector for creating a narrow angle beam of a lighting device.

The present invention further relates to a lighting device including such an optical arrangement.

The present invention yet further relates to a luminaire including such a lighting device.

### BACKGROUND OF THE INVENTION

Lighting devices based on solid state lighting (SSL) elements such as light-emitting diodes (LEDs) are rapidly increasing in popularity because such devices are considered an energy-friendly alternative to traditional lighting devices such as incandescent or halogen light bulbs. However, one of the main drawbacks of SSL element-based lighting devices is the higher cost of such devices compared to their traditional counterparts. Although this is offset by the superior lifetime of the SSL element-based lighting devices, this nevertheless forms a barrier for further market penetration of the SSL element-based lighting devices.

Part of the reason for the higher cost of SSL element-based lighting devices is that SSL elements generate light having completely different beam characteristics than for instance incandescent lighting devices. For this reason, SSL element-based lighting devices tend to comprise optical elements such as collimators and/or lenses to create a lighting device producing a desirable illumination profile, e.g. a spot light or the like.

For instance, in order to create a lighting device such as a lamp with a narrow beam angle, e.g. a beam angle of 20° or less, the luminous output of the SSL element is typically directed through a total internal reflection (TIR) lens shaped to produce a highly collimated beam. A particular challenge is that the dimensions of the TIR lens typically increase with decreasing beam angles to be produced. The dimensions (e.g. diameter) of the TIR lens are typically related to the dimensions (e.g. diameter) of the luminous surface of the SSL element. Hence, for lighting devices, e.g. spot lights or other types of lamps, that need to meet certain maximum dimensions, e.g. because the lighting device has to fit in a particular type of luminaire such as a ceiling down light, the size of the SSL element has to be limited in order to ensure that the TIR lens can produce the desired beam angle without exceeding its maximum allowed diameter. This limitation may prevent the lighting device from having the desired luminous output.

In addition, such TIR lenses require a relatively large amount of material, which makes such lenses heavy and costly.

### SUMMARY OF THE INVENTION

The present invention seeks to provide a more compact optical arrangement for producing narrow beams.

The present invention seeks to provide a lighting device including such a more compact optical arrangement.

The present invention yet further seeks to provide a luminaire including at least one such a lighting device.

According to an aspect, there is provided an optical arrangement comprising a reflector having a reflective elliptical surface delimiting a central aperture, said reflective elliptical surface having a first focal point and a second focal point on an optical axis extending through said central aperture; and a mirror on said optical axis for redirecting light generated in said first focal point and reflected by said elliptical reflector towards said mirror through said central aperture.

Such an optical arrangement is more compact than a TIR lens and can produce beam angles as narrow as 20° or less, e.g. 14°or less. This can be achieved by placement of the SSL element in the first focal point such that light produced by the SSL element under narrow angles relative to the optical axis of the optical arrangement can directly escape the optical arrangement through the central aperture opposite the SSL element, whereas light emitted by the SSL element under wider angles is reflected by the elliptical reflector onto the mirror, which redirects the reflected light towards an image of the second focal point produced by the mirror and through the central aperture, thereby narrowing the emission angle of the reflected light such that the light escaping the optical arrangement through the central aperture is highly collimated, i.e. is characterized by the desired narrow beam angle.

The mirror may be placed on said optical axis such that the first focal point is in between the mirror and the central aperture. The exact position of the mirror may be used to shape the beam angle of the light produced by the optical arrangement. The mirror may for instance be placed in between the first focal point and the second focal point to yield a particular compact optical arrangement.

In a particularly advantageous embodiment, the mirror is placed in the vicinity of the first focal point such that an image of the second focal point is generated beyond the central aperture. This yields a particularly narrow beam angle.

In some embodiments, the mirror may be a convex mirror or a concave mirror to further shape the beam produced by the optical arrangement. This may for instance be combined with the positioning of the mirror to produce a beam angle having the desired shape.

In an embodiment, the optical arrangement further comprises a reflective barrel around said central aperture for reflecting light received through said central aperture. The addition of such a barrel may further narrow the beam angle produced by the optical arrangement and/or may prevent or reduce glare.

The reflective barrel for instance may have a frustoconical shape to achieve the desired optical function.

The reflective barrel may comprise a curved reflective inner surface to further narrow the beam angle produced by the optical arrangement.

In an embodiment, the reflector comprises said barrel, said barrel being defined by a further reflective surface of the reflector, said further reflective surface delimiting a light exit cavity extending from the central aperture. This has the advantage that the optical arrangement may be produced as a single unit, e.g. using injection moulding, thereby providing a compact and cost-effective optical arrangement.

The optical arrangement for instance may be a moulded plastic optical arrangement, which has the advantage that the optical arrangement can be manufactured in large numbers in a cost-effective manner.

The reflective elliptical surface and the further reflective surface preferably are specular reflective surfaces, as this facilitates the production of particularly narrow beams by the optical arrangement.

According to another aspect, a lighting device is provided comprising the optical arrangement according to one or more of the aforementioned embodiments and a solid state lighting element in said first focal point, wherein the solid state lighting element is arranged to emit light towards said reflective elliptical surface.

Such a lighting device is capable of producing a narrow beam as explained above, and be can be manufactured in a cost-effective manner. In addition, because of the compact nature of the optical arrangement, a relatively large SSL element can be integrated in the lighting device without exceeding overall dimension limitations for the lighting device, such that the lighting device may produce a high intensity luminous output.

In at least some embodiments, the lighting device is a lamp such as a light bulb, a spot light bulb or the like.

In accordance with yet another aspect, there is provided a luminaire comprising the lighting device according to an embodiment of the present invention. Such a luminaire may for instance be a holder of the lighting device or an apparatus into which the lighting device is integrated.

### BRIEF DESCRIPTION OF THE DRAWINGS

Embodiments of the invention are described in more detail and by way of non-limiting examples with reference to the accompanying drawings, wherein:
Fig. 1 schematically depicts an optical arrangement according to an embodiment;
Fig. 2 schematically depicts an optical arrangement according to another embodiment;
Fig. 3 schematically depicts an optical arrangement according to yet another embodiment;
Fig. 4 schematically depicts a lighting device according to an embodiment;
   and
Fig. 5 depicts a luminous distribution produced by the lighting device of Fig. 4.

### DETAILED DESCRIPTION OF THE EMBODIMENTS

It should be understood that the Figures are merely schematic and are not drawn to scale. It should also be understood that the same reference numerals are used throughout the Figures to indicate the same or similar parts.

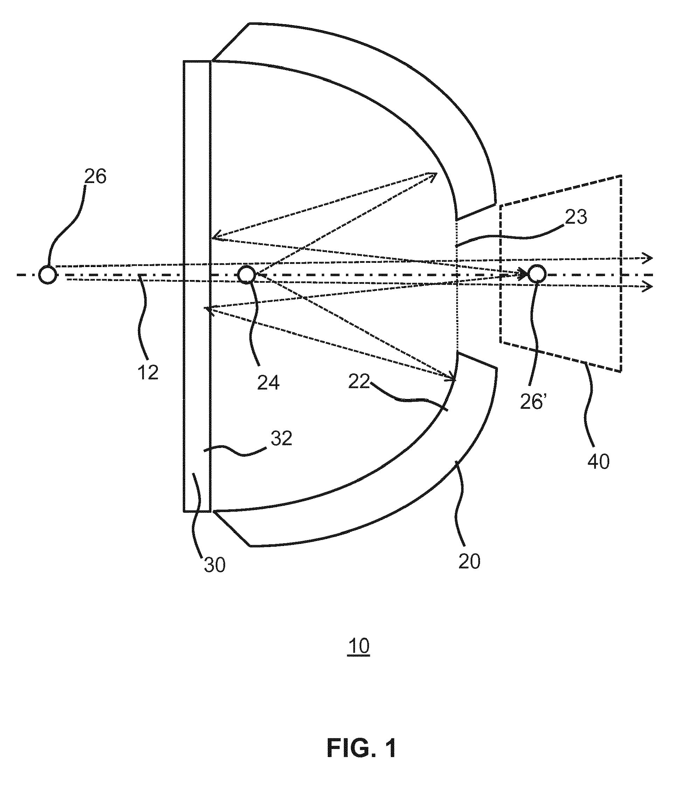

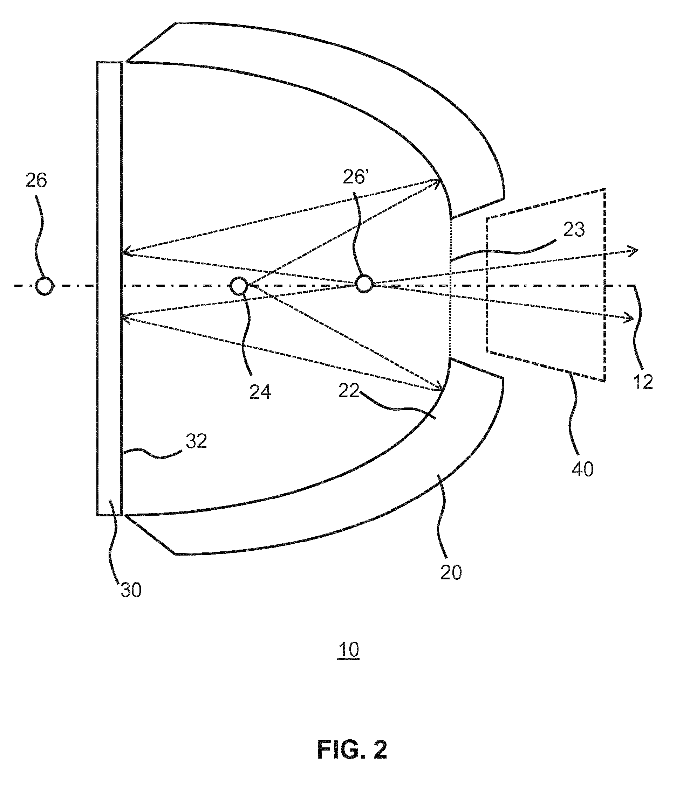

FIG. 1 and 2 schematically depict an optical arrangement 10 for a lighting device such as a lamp for a spot light, search light, stage light and so on, according to alternative embodiments of the present invention. The optical arrangement 10 comprises a reflector 20 having a reflective elliptical surface 22. The reflective elliptical surface 22 may be an approximated elliptical surface, e.g. a surface approximated by high order polynomials.

The reflective elliptical surface 22 delimits a central aperture 23 in the reflector 20, in other words the reflector 20 comprises a central hole 23 around which the reflective elliptical surface 22 is located. As is typical for an elliptical reflector, the reflective elliptical surface 22 has a first focal point 24 and a second focal point 26 each arranged on an optical axis 12 extending through the central aperture 23, wherein the first focal point 24 is the near focal point and the second focal point 26 is the far focal point. In other words, the first focal point 24 is located on the optical axis 12 of the optical arrangement 10 such that the first focal point 24 is located in between the central aperture 23 and the second focal point 26.

The optical arrangement 10 further comprises a mirror 30 having a reflective surface 32 facing the reflective elliptical surface 22. The mirror 30 is typically placed on the optical axis 12 such that the first focal point 24 is located in between the mirror 30 and the central aperture 23. In FIG. 1, the mirror 30 is positioned in the vicinity of the first focal point 24, i.e. in between the first focal point 24 and the second focal point 26, such that the mirror 30 creates an image 26' of the second focal point 26 in front of the first focal point 24. The reflector 20 and the mirror 30 define an optical cavity that is sealed apart from the central aperture 23 through which light can escape the optical cavity. In other words, light generated inside the optical cavity can only escape the optical cavity through the central aperture 23.

In FIG. 1, the image 26' is located beyond the central aperture 23, i.e. outside the optical cavity defined by the reflector 20 and the mirror 30. This for instance has the advantage that a particularly compact optical arrangement 10 can be produced, as the distance between the reflector 20 and the mirror 30 along the optical axis 10 is kept to a minimum.

The mirror 30 is positioned such that light originating from a light source such as an SSL element, positioned in the first focal point 24 and reflected by the reflective elliptical surface 22 towards the second focal point 26 is redirected by the mirror 30 towards the central aperture 23, as indicated by the dashed arrows in FIG. 1 and 2.

Consequently, when such a light source is positioned in the first focal point 24 such that the light source generates light towards the reflector 20, light rays produced by the light source under a small enough angle with the optical axis 12 will directly escape the optical arrangement 10 through the central aperture 23 without being reflected by the reflective elliptical surface 22 onto the mirror 30. As will be understood by the skilled person, the range of angles that can directly escape the optical arrangement 10 in this manner can be controlled by appropriate dimensioning of the central aperture 23. In other words, the central aperture 23 may have any appropriate diameter, which diameter may be selected to control the amount of light and in particular light beams within a particular angular range that can directly escape the optical arrangement 10 through the central aperture 23.

Light produced by the point-like light source outside the aforementioned narrow angular range is typically directed onto the reflective elliptical surface 22 surrounding the central aperture 23, which light is reflected towards the second focal point 26. In other words, the reflector 20 narrows the incident beams by reflecting them towards the second focal point 26. The reflected light is intercepted by the mirror 30 and redirected towards an image 26' of the second focal point 26, which may lie beyond, on, or in front of the central aperture 23. The resulting beam angle of the light escaping the optical arrangement 10 through the central aperture 23 may be characterised in some embodiments by having beam angles below a certain threshold, e.g. beam angles of 20° or less or even 14° or less.

It has been found that when a SSL element is placed in the first focal point 24, optimal luminous efficiency is achieved when the mirror 30 is placed in the vicinity of the first focal point 24 such that an image 26' of the second focal point 26 is formed beyond the central aperture 23 as mentioned above. It is however not essential that the image 26' is generated outside the sealed optical cavity. Alternatively, the mirror 30 may be placed in between the first focal point 24 and the second focal point 26 as shown in FIG. 2 such that the image of the second focal point 26 lies inside the optical cavity, i.e. in front of the central aperture 23, that is, in between the first focal point 24 and the central aperture 23. It is of course equally feasible to generate the image 26' to coincide with the central aperture 23. The mirror 30 may also be placed on the optical axis 12 beyond the second focal point 26 although this increases the overall size of the optical arrangement 10 and is therefore less preferred.

The reflective surface 32 of the mirror 30 may have any suitable shape, such as a flat shape, a concave shape or a convex shape. It will be understood that depending on the positioning of the mirror 30 on the optical axis 12, different shapes of the reflective surface 32 may be selected in order to obtain the maximum optical efficiency of the optical arrangement 10 as a function of the chosen position of the mirror 30 on the optical axis 12. For instance, a convex shaped reflective surface 32 may be advantageous if the mirror is located in between the first focal point 24 and the second focal point 26, as shown in FIG. 2. The shape of the reflective surface 32 may also be chosen in order to control the redirection of the light beams reflected by the reflective elliptical surface 22 in a particular manner, e.g. to control the beam angle produced by the optical arrangement 10.

As will be apparent, the reflective elliptical surface 22 and the reflective surface 32 preferably are specular reflective surfaces to facilitate the desired beam shaping function of the optical arrangement 10.

The optical arrangement 10 may optionally comprise a reflective barrel 40 to further shape the beam produced by the optical arrangement 10. The barrel 40 may be placed around the central aperture 23 such that some light escaping the optical arrangement 10 through the central aperture 23 is further reflected by the reflective barrel 40. This may further reduce the beam angle produced by the optical arrangement 10 and may reduce glare.

The reflective barrel 40 may be positioned on a further surface of the reflector 20, which further surface is opposite the reflective elliptical surface 22. Such a barrel 40 may have any suitable shape, such as a conical frustum, in which the barrel 40 tapers outwardly from the central aperture 23.

The reflective inner surface of the reflective barrel 40 may have any suitable shape; in an embodiment, the reflective inner surface of the reflective barrel 40 has a curved shape to aid the further reduction of the beam angle produced by the optical arrangement 10.

In FIG. 1, the optional reflective barrel 40 is a discrete component that is separate to the reflector 20. The reflective barrel 40 may be made of any suitable material. However, as will be explained in more detail later, the reflective barrel may also form an integral part of the reflector 20.

In an embodiment, the optical arrangement 10 may be made as a shell from a plastic material such that the optical arrangement 10 can be formed using straightforward moulding processes such as injection moulding. Non-limiting examples of suitable plastic materials include polycarbonate (PC), polyethylene terephthalate (PET) and poly (methyl methacrylate) (PMMA). Other suitable plastic materials will be apparent to the skilled person. A thus obtained optical arrangement 10 is lightweight because relatively little material is required to provide the reflector 20 and the mirror 30 and may be compact, in particular if the mirror 30 is located in the second focal point 26 or in between the first focal point 24 and the second focal point 26. It has been found that such an optical arrangement is still capable of producing beam angles of 20° or less despite its compact nature.

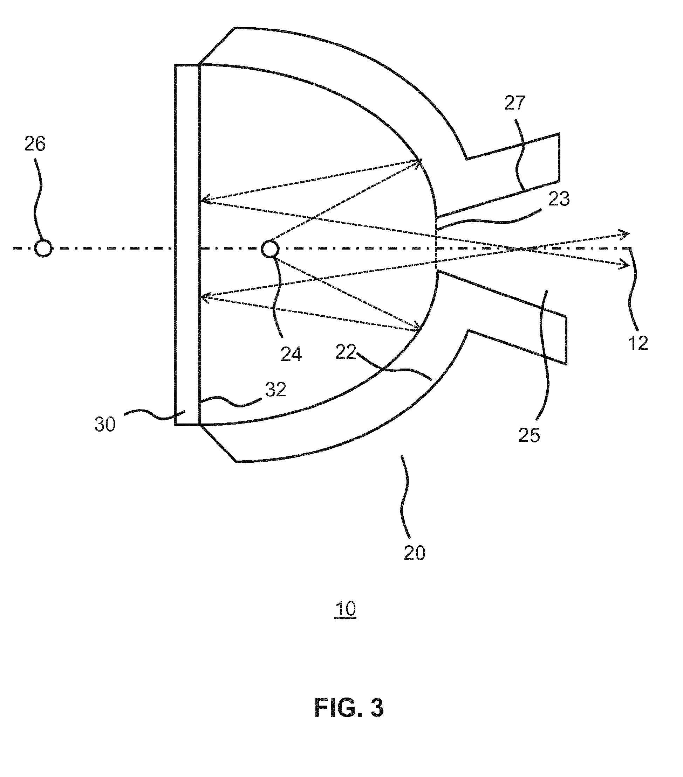

FIG. 3 schematically depicts an alternative embodiment of the optical arrangement 10, in which the reflective barrel forms an integral part of the reflector 20. In this embodiment, the reflector 20 has a body portion including a further reflective surface 27 that extends from a further surface of the reflector 20, which further surface is located opposite the reflective elliptical surface 22. The further reflective surface 27 delimits a light exit cavity 25 extending from the central aperture 23. As before, the body portion defining the integral barrel may have any suitable shape such as the shown frustoconical shape, in which the barrel tapers outwardly from the central aperture 23. The further reflective surface 27 may be a specular reflective surface. The further reflective surface 27 may have a curved shape to further limit the beam angle produced by the optical arrangement 10 as previously explained.

The integration of the barrel portion in the reflector 20 has the advantage that the optical arrangement 10 including such a barrel may be formed in a single moulding process, e.g. by injection moulding, thus providing an optical arrangement 10 that is lightweight, compact and cheap.

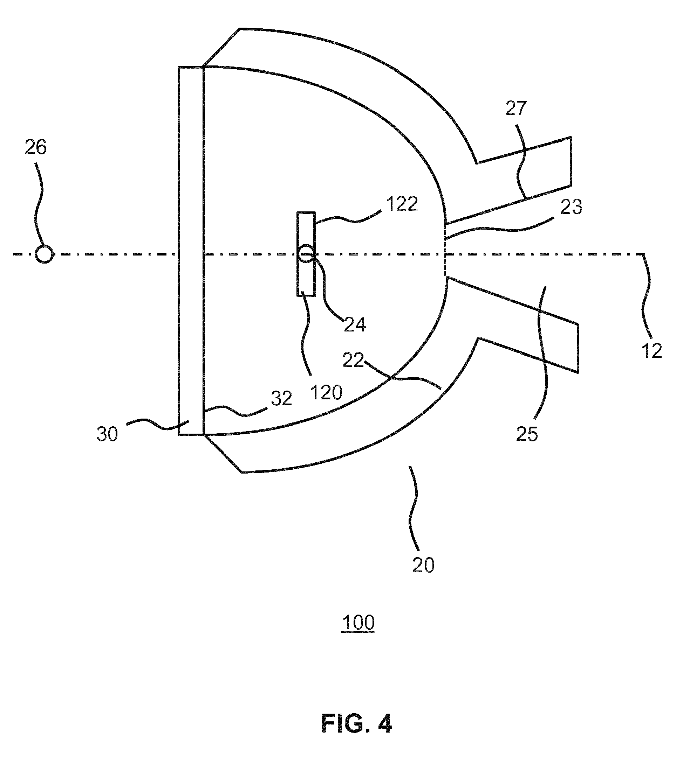

FIG. 4 schematically depicts a lighting device 100 according to an embodiment. The lighting device 100 may comprise any of the aforementioned embodiments of the optical arrangement 10. In particular, the embodiment of the optical arrangement 10 as previously disclosed in FIG. 3 is shown by way of non-limiting example only and should be understood that any of the other embodiments of the optical arrangement 10, such as the embodiments disclosed in FIG. 1 and 2 and described in the detailed description of these figures are equally feasible.

The lighting device 100 further comprises at least one solid state lighting element 120 positioned on the optical axis 12 in the first focal point 24 such that the luminous surface 122 of the solid state lighting element faces the central aperture 23 and the reflective elliptical surface 22 of the reflector 20. Consequently, the SSL element 120 is arranged to emit light towards the reflective elliptical surface 22 and the central aperture 23. Any suitable SSL element 120 may be used; for instance, the SSL element 120 may be a LED, which may be any suitable LED, such as a LED having an organic or inorganic semiconductor layer. The at least one SSL element 120 may be configured to produce white light or light of a particular colour. In an embodiment, the lighting device 100 comprises an array of SSL elements 120 positioned in the first focal point 24.

The lighting device 100 may further comprise additional elements, e.g. additional optical elements such as lenses, colour filters and so on. As such additional elements are optional elements only, these elements are not shown for the sake of clarity only.

In an embodiment, the luminous surface 122 of SSL element 120 has a diameter D'. In this embodiment, the lighting device 100 may produce a light beam having a beam angle relative to the optical axis 12 of 20° or less or even 14° or less whilst at the same time benefiting from a compact optical arrangement 10. Specifically, the ratio D/D' may be less than seven, wherein D is the overall diameter of the optical arrangement 10. For example, it has been demonstrated by the inventors that for a SSL element 120 having a diameter D' of 12 mm, the overall diameter D of the luminous arrangement 10 may be as little as 80 mm to achieve a 14° beam angle. This is a significant reduction in form factor compared to known TIR lenses, which typically require an overall diameter of at least 100 mm and a height of 40 mm to achieve such a beam angle. Consequently, the lighting device 100 benefits from the fact that the optical arrangement 10 requires substantially less material and can be substantially more compact than a corresponding TIR lens in order to achieve a corresponding beam angle.

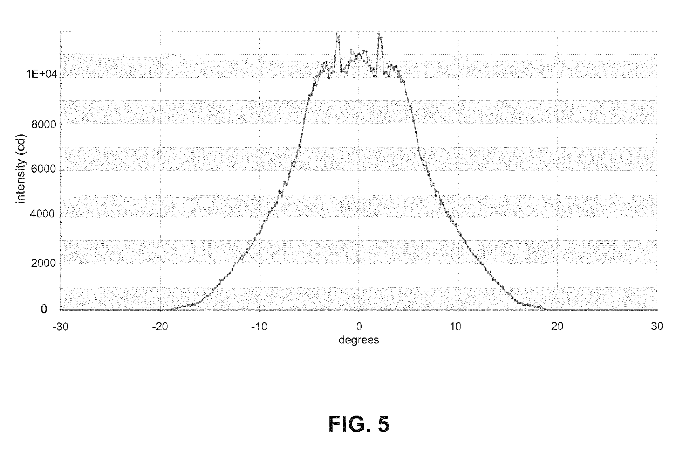

FIG. 5 shows the angular distribution of the simulated luminous output of the lighting device 100 of FIG. 4. As can be seen from this graph, a highly collimated luminous output with of beam angle well below 20° can be produced by the lighting device 100.

The lighting device 100 according to any of the aforementioned embodiments may be advantageously integrated into a luminaire to provide a luminaire benefiting from the inclusion of one or more of such compact lighting devices, e.g. one or more lamps, capable of producing a narrow beam angle, thereby improving the overall appearance of the luminaire. Any suitable type of luminaire required to produce a narrow beam may be contemplated, such as a ceiling spot light, a search light, a stage light, an electronic device including a lighting device required to produce a narrow beam such as a cooker hood, and so on.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

## Claims

1. An optical arrangement (10) comprising:
a reflector (20) having a reflective elliptical surface (22) delimiting a central aperture (23), said reflective elliptical surface having a first focal point (24) and a second focal point (26) on an optical axis (12) extending through said central aperture; and
a mirror (30) on said optical axis for redirecting light generated in said first focal point and reflected by said elliptical reflector towards said mirror through said central aperture.

2. The optical arrangement (10) of claim 1, wherein the mirror (30) is placed on said optical axis (12) such that the first focal point (24) is in between the mirror and the central aperture (23).

3. The optical arrangement (10) of claim 2, wherein the mirror (30) is placed in the vicinity of the first focal point (24) such that an image (26') of the second focal point (26) is generated beyond the central aperture (23).

4. The optical arrangement (10) of any of claims 1-3, wherein the mirror (30) is a convex mirror.

5. The optical arrangement (10) of any of claims 1-3, wherein the mirror (30) is a concave mirror.

6. The optical arrangement (10) of any of claims 1-5, further comprising a reflective barrel (40) around said central aperture (23) for reflecting light received through said central aperture.

7. The optical arrangement (10) of claim 6, wherein the reflective barrel (40) has a frustoconical shape.

8. The optical arrangement (10) of claim 6, wherein the reflective barrel (40) comprises a curved reflective inner surface.

9. The optical arrangement (10) of any of claims 6-8, wherein the reflector (20) comprises said barrel, said barrel being defined by a further reflective surface (27) of the reflector, said further reflective surface delimiting a light exit cavity (25) extending from the central aperture.

10. The optical arrangement (10) of claim 9, wherein the reflective elliptical surface (22) and the further reflective surface (27) are specular reflective surfaces.

11. The optical arrangement (10) of any of claims 1-10, wherein the optical arrangement is a moulded plastic optical arrangement.

12. The optical arrangement (10) of any of claims 1-1 l, wherein the reflector (20) and the mirror (30) combine to define a sealed optical cavity.

13. A lighting device (100) comprising the optical arrangement (10) of any of claims 1-12 and a solid state lighting element (120) in said first focal point (24), wherein the solid state lighting element is arranged to emit light towards said reflective elliptical surface (22).

14. The lighting device (100) of claim 13, wherein the lighting device is a lamp.

15. A luminaire comprising the lighting device (100) of claim 13 or 14.
